# EUROPÄISCHE PATENTSCHRIFT

(11) **EP 0 974 065 B1**
(45) Veröffentlichungstag und Bekanntmachung des Hinweises auf die Patenterteilung: **20.12.2000**
(21) Anmeldenummer: 98938625.5
(22) Anmeldetag: 22.06.1998
(51) Int. Cl.: G01T 1/20, G01T 7/00

(54) **FIBEROPTISCHE RÖNTGENKAMERA**
FIBRE OPTIC X-RAY CAMERA
CAMERA DE RADIOGRAPHIE A FIBRE OPTIQUE

(30) Priorität: 24.06.1997 DE 19726884; 08.06.1998 DE 19825610
(43) Veröffentlichungstag der Anmeldung: 26.01.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: SCHMITT, Peter, D-91058 Erlangen (DE); HANKE, Randolf, D-90766 Fürth (DE); BAUER, Norbert, D-91058 Erlangen (DE); MAISL, Michael, D-66629 Freisen (DE)
(74) Vertreter: Schoppe, Fritz, Dipl.-Ing.
(86) Internationale Anmeldenummer: EP9803813
(87) Internationale Veröffentlichungsnummer: WO9859260

(56) Entgegenhaltungen:
- US-A- 4 229 069
- US-A- 4 669 821
- US-A- 5 059 800
- US-A- 5 594 253
- PATENT ABSTRACTS OF JAPAN vol. 097, no. 008, 29. August 1997 & JP 09 090039 A (FURUKAWA ELECTRIC CO LTD:THE), 4. April 1997 in der Anmeldung erwähnt

## Beschreibung

Die vorliegende Erfindung bezieht sich auf die industrielle und medizinische Radioskopie (Röntgeninspektion) und insbesondere auf eine fiberoptische Röntgenkamera, die aufgrund ihres Aufbaus für den Einsatz unter einer hohen Strahlenbelastung geeignet ist. Diese Eigenschaft ist für viele industrielle Anwendungen von Bedeutung, bei denen herkömmliche Röntgenkameras keine ausreichende Standzeit aufweisen.

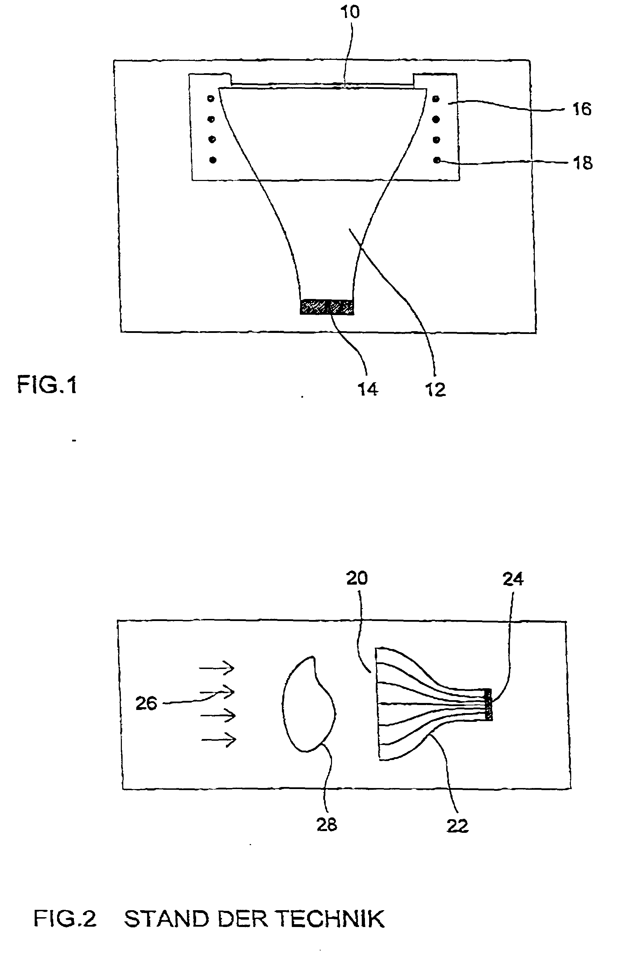

In Fig. 2 ist eine typische fiberoptische Röntgenkamera dargestellt, die aus einer Szintillatorvorrichtung 20, einer Fiberoptik 22 und einem Halbleitersensor 24 aufgebaut ist. Der Halbleitersensor 24 besteht im allgemeinen aus CCD-Sensoren oder Photodiodenarrays. Die Szintillatorvorrichtung 20 wandelt eine auf die Röntgenkamera treffende Röntgenstrahlung 26, die beispielsweise ein zu untersuchendes Objekt 28 passiert hat, in sichtbares Licht um, woraufhin die Fiberoptik 22 das in der Szintillatorvorrichtung 20 entstehende Licht auf den Sensor 24 führt, der für die ortsauflösende Erfassung des Lichtes sorgt. Die Fiberoptik 22 ersetzt hierbei eine herkömmliche linsenoptik, da die Fiberoptik 22 gegenüber einer herkömmlichen Linsenoptik einen wesentlich geringeren Lichtverlust aufweist, wodurch die Empfindlichkeit einer fiberoptischen Röntgenkamera wesentlich höher ist als diejenige einer mit einer Linsenoptik aufgebauten Kamera.

Fiberoptische Röntgenkameras können vorteilhaft bei allen Anwendungen eingesetzt werden, bei denen eine kompakte Bauweise oder eine hohe ortsauflösung erforderlich ist. Die Fiberoptik 22 kann, wie es in Fig. 2 gezeigt ist, als sogenannter Taper ausgeführt sein, bei dem das Eingangsfenster auf ein kleineres Ausgangsfenster abgebildet ist.

Fiberoptische Röntgenkameras haben jedoch aufgrund ihrer relativ kurzen Lebensdauer bei hoher Strahlenbelastung für industrielle Anwendungen noch keine Bedeutung erlangt.

Der Grund für die geringe Lebensdauer dieses Kameratyps unter hoher Strahlenbelastung liegt darin, daß die Röntgenstrahlung 26 nur zum Teil von der Szintillatorvorrichtung 20 absorbiert wird. In dem Isolatormaterial, üblicherweise Glas, aus dem die Fiberoptik 22 hergestellt ist, werden Farbzentren erzeugt, wodurch sich die Fiberoptik 22 braun verfärbt und immer weniger Licht von der Szintillatorvorrichtung 20 den Halbleitersensor 24 erreicht. Bei einer Strahlendosis von typischerweise 100 kRad wird die Kamera unbrauchbar. Bei industriellen Anwendungen kann diese Dosis bereits innerhalb weniger Stunden oder Tage erreicht sein. Gemäß dem Stand der Technik war es notwendig, derart verschlechterte Fiberoptiken entweder auszutauschen oder während einer langen Betriebsunterbrechung auszuheizen.

Die US-A-5,594,253 offenbart eine hybride luminiszente Vorrichtung zum Umwandeln von ionisierender und durchdringender Energie, wie z. B. Röntgenstrahlen, Gamma-Strahlen, Neutronen, Ionen, Elektronen und dergleichen, in sichtbares Licht für Anzeigeanwendungen. Die hybride luminiszente Vorrichtung umfaßt einen Phosphorschirn, der auf einer Eintrittsoberfläche eines Fiberoptikszintillators angeordnet ist, der wiederum mit einer Kamera oder einem entsprechenden Aufzeichnungsmedium abnehmbar gekoppelt sein kann.

Die JP 9-90039 A offenbart einen fiberoptischen Strahlungssensor, der eine optische Faser verwendet, die durch Beschichten eines Kerns mit einer Ummantelungsschicht gebildet ist, und die Strahlungsdosis in der Umgebung der Faser mißt, indem der Lichtausbreitungsverlust der Faser erfaßt wird, der auftritt, wenn Defekte in dem Glas, aus dem die Faser gebildet ist, durch Gamma-Strahlen hervorgerufen werden, die in der Umgebung der Faser vorhanden sind. Ein Loch, das in der Längsrichtung der Faser verläuft, ist durch die Ummantelungsschicht der Faser gebildet, wobei ein Metalldraht, der Wärme erzeugt, wenn der Draht erregt wird, durch das Loch geführt ist, so daß die Defekte in dem Kern und dem Glas in der Nähe des Kerns wirksam ausgeheilt werden können, wenn der Draht erregt wird.

Die US-4,229,069 A offenbart eine Vorrichtung für eine Fernbeobachtung von Objekten, die sich in Bereichen mit ionisierenden Strahlungsfeldern befinden. Ein fiberoptischer Kanal, der aus einem Faserbündel besteht, überträgt das aufgezeichnete Bild eines zu beobachtenden Objekts über eine biologische Abschirmung hinweg, die zum Schutz gegen die ionisierende Strahlung vorgesehen ist. Eine als Spule ausgebildete Wärmequelle soll in der Umgebung mit ionisierender Stahlung durch Erwärmen des Faserbündels zu einer Thermostabilisierung der Lichtleitungseigenschaften desselben beitragen.

Ausgehend von diesem Stand der Technik liegt der vorliegenden Erfindung die Aufgabe zugrunde, eine fiberoptische Röntgenkamera zu schaffen, die eine verbesserte und dauerhafte Erfassung von Röntgenstrahlung ermöglicht.

Eine weitere Aufgabe der vorliegenden Erfindung besteht darin, ein Verfahren zur verbesserten und dauerhaften Erfassung von Röntgenstrahlung zu schaffen.

Die Aufgabe der vorliegenden Erfindung wird durch eine Vorrichtung zur Erfassung von Röntgenstrahlung gemäß Anspruch 1 und durch ein Verfahren zur Erfassung von Röntgenstrahlung gemäß Anspruch 14 gelöst.

Der vorliegenden Erfindung liegt die Erkenntnis zugrunde, daß die beschriebenen Probleme bei einem Einsatz einer fiberoptischen Röntgenkamera insbesondere unter einer hohen Strahlenbelastung beseitigt werden können, indem zumindest ein Teil der Fiberoptik während des Erfassens von Röntgenstrahlung auf eine vordefinierte Temperatur erwärmt wird, bei der eine Abbaurate v_{f-} von Farbzentren größer oder gleich der Erzeugungsrate v_{f+} von Farbzentren ist. Aufgrund dessen wird während des Betriebs der Röntgenkamera die Erzeugung von Farbzentren größtenteils vermieden, wodurch eine Verfärbung der Fiberoptik verhindert wird.

Ein Vorteil der vorliegenden Erfindung besteht daher darin, daß ein Austauschen der Fiberoptik bzw. ein mit einer Betriebsunterbrechung verbundenes Ausheizen der Fiberoptik ganz entfällt oder zumindest erst nach einem erheblich längeren Betrieb als bisher erforderlich ist.

Ein weiterer Vorteil der nachfolgend beschriebenen Erfindung gegenüber dem Stand der Technik besteht darin, daß eine wesentlich verbesserte Standzeit der fiberoptischen Röntgenkamera unter erhöhter Strahlenbelastung ermöglicht ist. Die erhöhte Standzeit ermöglicht erstmals den Einsatz dieses Röntgenkameratyps unter industriellen Bedingungen.

Gemäß einem weiteren Aspekt der vorliegenden Erfindung wird eine verbesserte fiberoptische Röntgenkamera und ein verbessertes Verfahren zur Erfassung von Röntgenstrahlung geschaffen, um einen dauerhaften Betrieb der fiberoptischen Röntgenkamera auch unter einer erhöhten Strahlenbelastung zu ermöglichen, wobei eine mechanische Belastung oder eine ungleichmäßige Strahlungsresistenz der Fiberoptik aufgrund einer inhomogenen Temperaturverteilung in der Fiberoptik vermieden wird. Hierbei ist die Erfassungseinrichtung räumlich getrennt von der Fiberoptik angeordnet und zwischen der Erfassungseinrichtung und der Fiberoptik ist eine optische Einrichtung vorgesehen, die das von der Fiberoptik austretende Licht auf die Erfassungseinrichtung richtet.

Während des Betriebs einer fiberoptischen Röntgenkamera, d. h. vor allem beim Heizen der Fiberoptik, ist ein direkt an die Fiberoptik gekoppelter Sensor aufgrund der starken Erwärmung der Fiberoptik einer hohen Temperatur ausgesetzt. Diese hohe Temperatur verursacht in dem Sensor ein hohes Dunkelsignal, was zu einer verschlechterten Bildqualität und einer geringeren Dynamik der Röntgenkamera führt.

Dieses Problem kann dadurch gelöst werden, daß die Fiberoptik auf der dem Sensor zugewandten Seite gekühlt wird. Ein Nachteil dieser Lösung besteht jedoch darin, daß aufgrund der sich ergebenden inhomogenen Temperaturverteilung in der Fiberoptik hohe mechanische Spannungen zu erwarten sind, die zur Bildung von Rissen und damit zu einer Beschädigung der Fiberoptik führen können.

Diese inhomogene Temperaturverteilung in der Fiberoptik hat einen weiteren Nachteil zur Folge, der darin besteht, daß bei einem ungünstigen Verhältnis Durchmesser/Länge der Fiberoptik die stark inhomogene Temperaturverteilung in der Fiberoptik außerdem eine ortsabhängige Variation der Strahlungsresistenz und damit eine unregelmäßige und bereichsweise Verfärbung der Fiberoptik verursacht.

Der vorliegenden Erfindung liegt die Erkenntnis zugrunde, daß die oben angesprochenen Probleme mit einer inhomogenen Temperaturverteilung, insbesondere bei einer hohen Strahlenbelastung, beseitigt werden können, indem die Erfassungseinrichtung (der Sensor) räumlich getrennt von der Fiberoptik angeordnet ist, wobei das aus der Fiberoptik austretende Licht über eine optische Einrichtung zu dem Sensor geführt wird. Da die Fiberoptik über ihrer gesamten Länge gleichförmig erwärmt werden kann, wird eine homogene Temperaturverteilung in der Fiberoptik erreicht, ohne dabei die elektronischen Eigenschaften des Sensors zu beeinflussen, wobei ferner ein schnelleres Aufheizen der gesamten Fiberoptik ermöglicht wird. Außerdem wird durch die homogene TemperaturVerteilung in der Fiberoptik das Auftreten von mechanischen Spannungen in dem Fiberoptikmaterial weitgehend vermieden, wodurch die mechanische Belastung der Fiberoptik und damit eine mögliche Beschädigung der Fiberoptik stark verringert wird.

Bevorzugte Ausführungsbeispiele der vorliegenden Erfindung werden nachfolgend unter Bezugnahme auf die beiliegenden Zeichnungen näher erläutert. Es zeigen:
- Fig. 1: eine Prinzipdarstellung einer fiberoptischen Röntgenkamera;
- Fig. 2: schematisch den Aufbau einer bekannten Röntgeninspektionsanlage mit einer fiberoptischen Röntgenkamera;
- Fig. 3: schematisch den Aufbau einer fiberoptischen Röntgenkamera;
- Fig. 4: schematisch den Aufbau einer fiberoptischen Röntgenkamera gemäß einem ersten Ausführungsbeispiel der vorliegenden Erfindung;
- Fig. 5: eine Prinzipdarstellung, einer fiberoptischen Röntgenkamera gemäß einem weiteren Ausführungsbeispiel der vorliegenden Erfindung; und
- Fig. 6: eine Prinzipdarstellung einer fiberoptischen Röntgenkamera gemäß nach einem weiteren Ausführungsbeispiel der vorliegenden Erfindung.

Anhand von Fig. 1 - 3 werden nun einige grundlegende Beispiele von fiberoptischen Röntgenkameras beschrieben, die das Verständnis den vorliegenden Erfindung erleichtern sollen.

Ein Szintillator 10 ist an einem Ende einer Fiberoptik 12 angeordnet, während an dem anderen Ende der Fiberoptik 12 eine Erfassungseinrichtung 14 angeordnet ist. Die Fiberoptik 12 ist aus einem Bündel einer Vielzahl von Glasfasern aufgebaut. Um den Szintillator 10 und um zumindest einen Abschnitt der Fiberoptik 12 ist eine Halterung 16 angeordnet. In der Halterung 16 sind mehrere Heizdrähte 18 vorgesehen, die während des Erfassens von Röntgenstrahlung mittels der fiberoptischen Röntgenkamera den benachbart zu dem Szintillator 10 angeordneten Teil der Fiberoptik 12 erwärmen.

Der Szintillator 10 kann beispielsweise entweder als Szintillatorschicht ausgebildet oder durch Dotieren der Endabschnitte, z. B. mit Erbium, in den einzelnen Faserenden der Fiberoptik 12 eingebacken sein.

Die beim unbeheizten Betrieb von Fiberoptiken auftretende strahlungsbedingte Verfärbung derselben kann durch mehrtägiges Heizen der Fiberoptik auf eine Temperatur im Bereich von 100°C bis 150°C größtenteils rückgängig gemacht werden.

Durch die Röntgenstrahlung, die durch den Szintillator in die Fiberoptik eindringt, werden Farbzentren mit einer Rate v_{f+}, die vom Strahlungsspektrum und von der Dosis abhängt, erzeugt. Das zugrundeliegende Prinzip basiert nun darauf, daß diese erzeugten Farbzentren durch ein Heizen der Fiberoptik 12 während des Betriebs der Röntgenkamera abgebaut werden können. Dabei werden die Farbzentren bei einer Erwärmung der Fiberoptik 12 auf eine Temperatur T mit einer Rate von v_{f-} abgebaut.

Somit kann ein Abbau der erzeugten Farbzentren erreicht werden, indem die Fiberoptik 12 während des Betriebs der Röntgenkamera auf einer Temperatur T gehalten wird, bei der die Rate v_{f+} für die Erzeugung der Farbzentren kleiner oder gleich der Rate v_{f-} für den Abbau der Farbzentren ist. Die hierfür erforderliche Temperatur hängt naturgemäß vom Röntgenspektrum und von der Dosisleistung ab, die auf die Röntgenkamera gelangt. Bei derzeit typischerweise für industrielle Anwendungen verwendeten Spektren und Dosen zeigt sich eine Temperatur im Bereich von 100°C bis 150°C als ausreichend.

Da die Strahlenbelastung der Fiberoptik 12 durch Absorption der Röntgenstrahlung mit wachsender Materialdicke abnimmt, kann es ausreichend sein, die Fiberoptik 12 nur auf der dem Szintillator 10 zugewandten Seite zu beheizen, während die der Erfassungseinrichtung 14, d. h. dem Sensor, zugewandte Seite beispielsweise auf Raumtemperatur gehalten wird. Alternativ kann anwendungsabhängig die gesamte Faseroptik beheizt werden, wobei ein Temperaturgradient von dem Szintillator zu dem Sensor verwendet werden kann.

Bei dem in Fig. 1 dargestellten Aufbau einer fiberoptischen Röntgenkamera erfolgt die Heizung der Fiberoptik 12 über isolierte Heizdrähte 18 einer beheizbaren Halterung 16, die eine elektrische Widerstandsheizung bilden, wobei nur der vordere Teil der Fiberoptik 12 beheizt wird, um eine zu starke Erwärmung der Erfassungseinrichtung 14 zu vermeiden. Diese Anordnung ist bei Anwendungen vorteilhaft, bei denen die Röntgenstrahlung eine Energie im Bereich von ca. 50 - 150 keV aufweist, da in diesem Fall die Eindringtiefe der Röntgenstrahlung in die Fiberoptik im Bereich von einigen Millimetern bis Zentimetern liegt. Sofern es erforderlich ist, kann die Erfassungseinrichtung rückseitig, z. B. durch einen Peltier-Kühlelement (nicht gezeigt), gekühlt werden. Dies kann beispielsweise bei Erfassungseinrichtungen mit einem mit der Temperatur stark zunehmenden Dunkelsignal notwendig sein, z. B. bei CCD-Sensoren.

Alternativ zu in Fig. 1 dargestellten Anordnung existiert eine Vielzahl von Möglichkeiten, die Fiberoptik zu heizen, auch die der Ausführungsbeispiele der vorliegenden Erfindung. Beispielsweise kann die Fiberoptik in ein geheiztes Gehäuse eingebaut sein, wobei die Heizung der Fiberoptik dann ebenfalls durch eine Wärmleitung hervorgerufen wird.

Darüberhinaus sind jedoch neben der Beizung durch Wärmeleitung weitere, sich davon unterscheidende Ausführungsformen für die Heizung der Fiberoptik realisierbar, die auf einer Konvektion oder einer Strahlung basieren.

Beispielsweise kann die Fiberoptik derart in einem Gehäuse angeordnet sein, daß um die Fiberoptik ein abgeschlossenes Luft- bzw. Gasvolumen entsteht. Die Heizung erfolgt dann durch Erwärmen der eingeschlossenen Luft, bzw. eines geeigneten Schutzgases, wobei die Heizung der Fiberoptik durch Konvektion hervorgerufen wird.

Die Vorderseite der Fiberoptik könnte ferner direkt mittels einer Strahlung, z. B. einer Infrarotstrahlung, aufgeheizt werden.

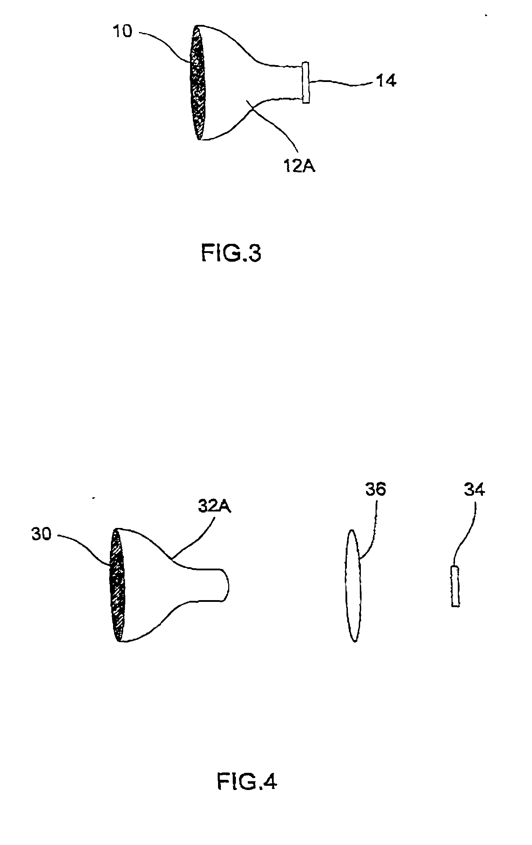

In Fig. 3 ist der schematische Aufbau einer fiberoptischen Röntgenkamera, wie sie oben bezugnehmend beschrieben wurde, mit einer geheizten Fiberoptik 12A und einer direkten Sensorkopplung zur Verdeutlichung nochmals vereinfacht dargestellt.

Im folgenden werden nun bevorzugte Ausführungsbeispiele der vorliegenden Erfindung beschrieben.

Die beschriebenen Probleme, bzgl. der hohen mechanischen Spannungen in der Fiberoptik aufgrund einer stark inhomogenen Temperaturverteilung in der Fiberoptik bzw. einer inhomogenen Strahlungsresistenz der Fiberoptik, sind durch die direkte Kopplung der Fiberoptik an den Sensor bedingt. Bei der vorliegenden Erfindung wird dieses Problem dadurch gelöst, daß ein sensor (eine Erfassungseinrichtung) 34 nicht direkt mit einer geheizten Fiberoptik 32A gekoppelt ist, sondern die Ausgangsseife der geheizten Fiberoptik 32A über eine Linsenoptik (ein Objektiv) 36 auf den Sensor 34 abgebildet wird. Eine solche Anordnung ist schematisch in Fig. 4 dargestellt. Diese Kopplungsanordnung hat zwar eine geringere Lichtempfindlichkeit der fiberoptischen Röntgenkamera zur Folge, bietet aber den Vorteil, daß die Fiberoptik homogen und schnell aufgeheizt werden kann.

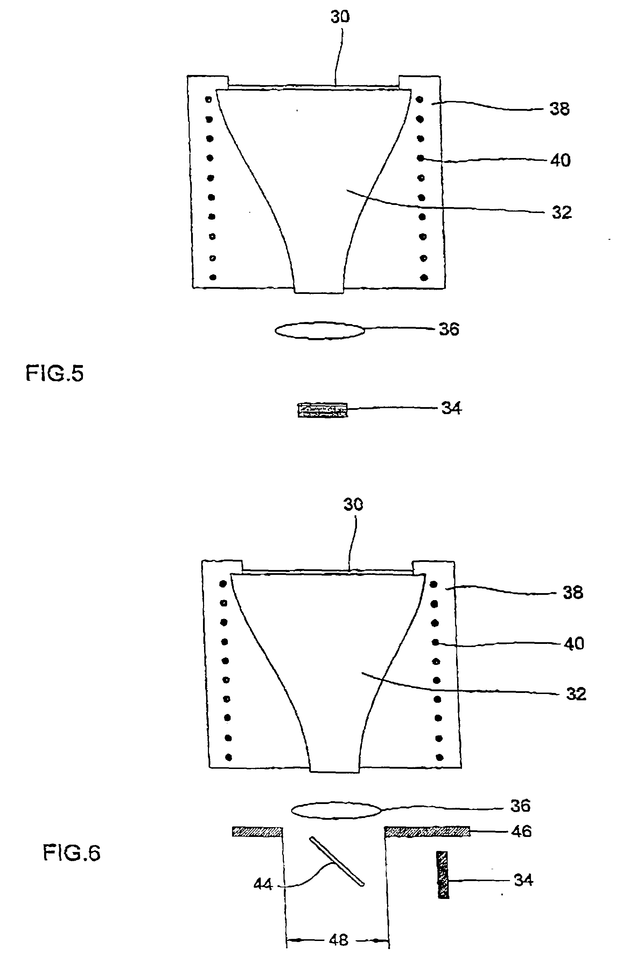

Im folgenden wird nun anhand von Fig. 5 ein erstes bevorzugtes Ausführungsbeispiel einer geheizten fiberoptischen Röntgenkamera gemäß der vorliegenden Erfindung dargestellt.

Ein Szintillator 30 ist an einem Ende einer Fiberoptik 32 angeordnet, während an dem anderen Ende der Fiberoptik 32 räumlich getrennt von der Fiberoptik 32 eine Erfassungseinrichtung 34 angeordnet ist. Zwischen der Fiberoptik 32 und der Erfassungseinrichtung 34 ist eine optische Einrichtung 36 vorgesehen. Die Fiberoptik 32 ist aus einem Bündel einer Vielzahl von Glasfasern aufgebaut. Um den Szintillator 30 und im wesentlichen um die gesamte Fiberoptik 32 ist bei dem dargestellten Ausführungsbeispiel eine Halterung 38 angeordnet. In der Halterung 38 sind mehrere Heizdrähte 40 vorgesehen, die während des Erfassens von Röntgenstrahlung mittels der fiberoptischen Röntgenkamera die gesamte Fiberoptik 32 homogen erwärmen. Das aus der Piberoptik 32 austretende Licht wird über die optische Einrichtung 36 auf die Erfassungseinrichtung 34 abgebildet.

Da die Erfassungseinrichtung 34 räumlich getrennt von der Fiberoptik 32 angeordnet ist, tritt keine gegenseitige störende thermische Beeinflussung zwischen der Erfassungseinrichtung 34 und der Fiberoptik 32 auf. Während des Betriebs der fiberoptischen Röntgenkamera kann die Fiberoptik 32 folglich über ihrer gesamten Länge beheizt werden, wodurch in der Fiberoptik 32 eine im wesentlichen homogene Temperaturverteilung erreicht wird. Aufgrund dieser homogenen Temperaturverteilung werden in der Fiberoptik 32 hohe mechanische Spannungen vermieden, die zur Bildung von Rissen und damit zu einer Beschädigung der Fiberoptik führen können. Folglich kann das Aufheizen der Fiberoptik 32 wesentlich schneller als bei den im Stand der Technik beschriebenen Anordnungen erfolgen.

Aufgrund der erreichten sehr homogenen Temperaturverteilung in der Fiberoptik 32 ergibt sich außerdem eine gleichförmige Strahlungsresistenz der Fiberoptik 32. Diese gleichförmige Strahlungsresistenz bewirkt, daß die Abbaurate v_{f-} von Farbzentren, die größer oder gleich der Erzeugungsrate v_{f+} von Farbzentren in der Fiberoptik 32 ist, in dem gesamten Material der Fiberoptik 32 einen einheitlichen Wert annimmt, wodurch ein ungleichmäßiger Abbau von Farbzentren und damit eine mögliche ungleichmäßige Verfärbung bestimmter Bereiche der Fiberoptik 32 vermieden wird. Dadurch wird eine Beeinträchtigung der optischen Eigenschaften der Fiberoptik 32 während des Betriebs der fiberoptischen Röntgenkamera weitgehend verhindert.

In Fig. 6 ist ein weiteres Ausführungsbeispiel der vorliegenden Erfindung dargestellt.

Die Anordnung des Szintillators 30, der Fiberoptik 32, der Halterung 38 und des Heizdrahtes 40 ist entsprechend der bei dem Ausführungsbeispiel von Fig. 5 dargestellten Anordnung aufgebaut und wird folglich nicht nochmals erläutert.

Im Unterschied zu dem oben bezugnehmend auf Fig. 5 beschriebenen Ausführungsbeispiel ist nun zwischen der getrennt von der Fiberoptik 32 angeordneten Erfassungseinrichtung 34 und dem Objektiv 36 zusätzlich ein Umlenkspiegel 44 vorgesehen, über den das aus der Fiberoptik 32 austretende Licht zu der getrennt von der Fiberoptik 32 angeordneten Erfassungseinrichtung 34 geführt wird. Das Objektiv 36 kann jedoch auch an einer Position zwischen dem Umlenkspiegel 44 und der Erfassungseinrichtung 34 angeordnet sein (nicht dargestellt), ohne daß die Funktionsweise der Anordnung verändert wird. Ferner ist zwischen der getrennt von der Fiberoptik 32 angeordneten Erfassungseinrichtung 34 und der Fiberoptik 32 eine Abschirmung 46 mit einer Öffnung 48 vorgesehen.

Da ein Teil der Röntgenstrahlung bei entsprechend hoher Energie der Röntgenstrahlung die Fiberoptik 32 durchdringen und auf die Erfassungseinrichtung 34 gelangen kann, ist entweder zwischen der Fiberoptik 34 und dem Objektiv 36 oder zwischen dem Objektiv 36 und der Erfassungseinrichtung 34 ein Umlenkspiegel 44 vorgesehen, so daß die Erfassungseinrichtung 34 außerhalb des direkten Röntgenstrahls angeordnet sein kann. Die Erfassungseinrichtung 34 kann zusätzlich durch eine entsprechende Blende bzw. Abschirmung 46, die beispielsweise aus Blei gebildet ist, vor der Röntgenstrahlung geschützt werden. Die Größe der Öffnung 48 in der Abschirmung 46 ist so gewählt, daß das aus der Fiberoptik 32 austretende Licht über das Objektiv 36, das sowohl vor als auch nach dem Umlenkspiegel 44 angeordnet sein kann, und über den Umlenkspiegel 44 ungehindert die Erfassungseinrichtung 34 erreichen kann.

Diese erfindungsgemäße Anordnung stellt sicher, daß die elektrischen Eigenschaften der Erfassungseinrichtung 34 nicht durch die die Fiberoptik 32 durchdringende Röntgenstrahlung beeinträchtigt werden.

zusammenfassend kann festgestellt werden, daß mittels der vorliegenden erfindungsgemäßen fiberoptischen Röntgenkamera deutliche Verbesserungen der mechanischen, optischen und elektronischen Eigenschaften der Anordnung erreicht werden, wodurch die Standzeit dieses Röntgekameratyps bei einem Einsatz unter industriellen Bedingungen erfindungsgemäß weiter erhöht wird.

## Patentansprüche

1. Vorrichtung zur Erfassung von Röntgenstrahlung, mit folgenden Merkmalen:
einem Szintillator (30) zum Umwandeln einer auf denselben einfallenden Röntgenstrahlung in Licht;
einer Erfassungseinrichtung (34) zur Erfassung des durch den Szintillator (30) erzeugten Lichts;
einer Fiberoptik (32) zum Führen des durch den Szintillator (30) erzeugten Lichts von einem an dem Szintillator (30) angeordneten Eingangsende der Fiberoptik (32) zu einem Ausgangsende der Fiberoptik (32), dadurch gekennzeichnet, daß die Erfassungseinrichtung (34) räumlich getrennt von der Fiberoptik (32) angeordnet ist und zwischen der Erfassungseinrichtung (34) und der Fiberoptik (32) eine optische Einrichtung vorgesehen ist, die das von der Fiberoptik (32) austretende Licht auf die Erfassungseinrichtung (34) richtet; und
einer Heizeinrichtung (40), um die gesamte Fiberoptik (32) während des Erfassens von Röntgenstrahlung auf eine vorbestimmte Temperatur mit einer homogenen Temperaturverteilung zu erwärmen.

2. Vorrichtung zur Erfassung von Röntgenstrahlung gemäß Anspruch 1, bei der die Heiztemperatur der Fiberoptik (32) einer Temperatur entspricht, bei der eine Abbaurate (v_{f-}) von während des Empfangs der Röntgenstrahlung in der Fiberoptik (32) erzeugten Farbzentren gleich oder größer ist als eine Erzeugungsrate (v_{f+}) der Farbzentren.

3. Vorrichtung zur Erfassung von Röntgenstrahlung gemäß Anspruch 1 oder 2, bei der die Heiztemperatur zwischen 100°C und 150°C liegt.

4. Vorrichtung zur Erfassung der Röntgenstrahlung gemäß einem der Ansprüche 1 bis 3, bei der die Heizeinrichtung durch ein geheiztes Gehäuse gebildet ist, in das die Fiberoptik (32) gehäust ist.

5. Vorrichtung zur Erfassung von Röntgenstrahlung gemäß einem der Ansprüche 1 bis 3, bei der die Heizeinrichtung durch eine beheizte ringförmige Halterung (40) zum Halten der Fiberoptik (32) gebildet ist.

6. Vorrichtung zur Erfassung von Röntgenstrahlung gemäß einem der Ansprüche 1 bis 3, bei der zumindest ein Teil der Fiberoptik (32) in einem abgeschlossenen Gasvolumen angeordnet ist, wobei die Fiberoptik (32) durch eine Erwärmung der in dem Gasvolumen enthaltenen Gas erwärmt wird.

7. Vorrichtung zur Erfassung von Röntgenstrahlung gemäß einem der Ansprüche 1 bis 3, bei der die Reizeinrichtung durch eine Strahlungseinrichtung zum Bestrahlen der Fiberoptik (32) gebildet ist.

8. Vorrichtung zur Erfassung von Röntgenstrahlung gemäß Anspruch 7, bei der die Strahlungseinrichtung eine Infrarotstrahlungseinrichtung ist.

9. Vorrichtung zur Erfassung von Röntgenstrahlung gemäß einem der Ansprüche 1 bis 8, bei der die Erfassungseinrichtung (34) zur Erfassung des Lichts durch einen Halbleitersensor gebildet ist.

10. Vorrichtung zur Erfassung von Röntgenstrahlung gemäß Anspruch 9, bei der der Ealbleitersensor durch ein Halbleitersensorarray gebildet ist.

11. Vorrichtung zur Erfassung von Röntgenstrahlung gemäß einem der Ansprüche 1 - 10, bei der die optische Einrichtung durch eine Linsenoptik (36) gebildet ist.

12. vorrichtung zur Erfassung von Röntgenstrahlung gemäß Anspruch 11, bei der die optische Einrichtung eine Lichtumlenkanordnung (44) aufweist, die entweder zwischen der Fiberoptik (32) und der Linsenoptik (36) oder zwischen der Linsenoptik (36) und der Erfassungseinrichtung (34) angeordnet ist.

13. Vorrichtung zur Erfassung von Röntgenstrahlung gemäß einem der Ansprüche 1 bis 12, bei der die optische Einrichtung eine Abschirmungsanordnung (46) zum Abschirmen der Erfassungseinrichtung (34) von einer direkten Röntgenbestrahlung aufweist.

14. Verfahren zur Erfassung von Röntgenstrahlung mit folgenden Schritten:
Umwandeln einer Röntgenstrahlung in Licht mittels eines Szintillators (30);
Erfassen des durch den Szintillator (30) erzeugten Lichts mittels einer Erfassungseinrichtung (34);
Führen des durch den Szintillator (30) erzeugten Lichts von einem an dem Szintillator (30) angeordneten Eingangsende der Fiberoptik (32) zu einem Ausgangsende der Fiberoptik (32);
Richten des aus der Piberoptik (32) austretenden Lichts auf die von der Fiberoptik (32) räumlich getrennt angeordnete Erfassungseinrichtung (34) mittels einer zwischen der Erfassungseinrichtung (34) und der Fiberoptik (32) vorgesehenen optischen Einrichtung (36, 44, 46); und
Erwärmen der gesamten Fiberoptik (32) während des Erfassens von Röntgenstrahlung auf eine vordefinierte Temperatur mit einer homogenen Temperaturverteilung mittels einer Heizeinrichtung (40).

15. Verfahren zur Erfassung von Röntgenstrahlung gemäß Anspruch 14, bei dem die Heiztemperatur der Fiberoptik (32) einer Temperatur entspricht, bei der eine Abbaurate (v_{f-}) von während des Empfangs der Röntgenstrahlung in der Fiberoptik (32) erzeugten Farbzentren gleich oder größer ist als eine Erzeugungsrate (v_{f+}) der Farbzentren.

16. Verfahren zur Erfassung von Röntgenstrahlung gemäß Anspruch 14 oder 15, bei dem eine Linsenoptik (36) als optische Einrichtung verwendet wird.

17. Verfahren zur Erfassung von Röntgenstrahlung gemäß Anspruch 16, bei dem das aus der Fiberoptik (32) austretende Licht mittels einer Lichtumlenkanordnung (44), die entweder zwischen der Fiberoptik (32) und der Linsenoptik (36) oder zwischen der Linsenoptik (36) und der Erfassungseinrichtung (34) angeordnet ist, umgelenkt wird.

18. Verfahren zur Erfassung von Röntgenstrahlung gemäß Anspruch 16 oder 17, bei dem die Erfassungseinrichtung (34) mittels einer Abschirmungsanordnung (46) von einer direkten Röntgenbestrahlung abgeschirmt wird.

## Claims

1. A device for detecting X-radiation comprising:
a scintillator (30) for converting X-radiation impinging thereon into light;
a detecting device (34) for detecting the light produced by the scintillator (30);
a fibre optic system (32) for conducting the light produced by the scintillator (30) from an input end of the fibre optic system (32) arranged at the scintillator (30) to an output end of said fibre optic system (32), characterized in that the detecting device (34) is arranged in a spaced relationship with the fibre optic system (32) and an optical means being provided between the detecting device (34) and the fibre optic system (32), said optical means directing the light emerging from the fibre optic system (32) onto the detecting device (34); and
a heating means (40) used for heating the whole fibre optic system (32) during the detection of X-radiation to a predetermined temperature with a homogeneous temperature distribution.

2. The device for detecting X-radiation according to claim 1, wherein the heating temperature of the fibre optics system (32) corresponds to a temperature at which a reduction rate v_{f-} of colour centres produced in the fibre optic system (32) while the X-radiation is being received is equal to or higher than a production rate v_{f+} of the colour centres.

3. The device for detecting X-radiation according to claim 1 or 2, wherein the heating temperature is between 100°C and 150°C.

4. The device for detecting X-radiation according to any of claims 1 to 3, wherein the heating means is defined by a heated housing in which the fibre optic system (32) is housed.

5. The device for detecting X-radiation according to any of claims 1 to 3, wherein the heating means is defined by a heated annular holder (40) for holding the fibre optic system (32).

6. The device for detecting X-radiation according to any of claims 1 to 3, wherein at least part of the fibre optic system (32) is arranged in a closed gas volume, said fibre optic system (32) being heated by heating the gas contained in said gas volume.

7. The device for detecting X-radiation according to any of claims 1 to 3, wherein the heating means is defined by a radiation means for irradiating the fibre optic system (32).

8. The device for detecting X-radiation according to claim 7, wherein the radiation means is an infrared radiation means.

9. The device for detecting X-radiation according to any of claims 1 to 8, wherein the detecting device (34) for detecting the light is defined by a semiconductor sensor.

10. The device for detecting X-radiation according to claim 9, wherein the semiconductor sensor is defined by a semiconductor sensor array.

11. The device for detecting X-radiation according to any of claims 1 to 10, wherein the optical means is defined by a lens optic system (36).

12. The device for detecting X-radiation according to claim 11, wherein the optical means comprises a light deflecting arrangement (44) which is arranged either between the fibre optic system (32) and the lens optic system (36) or between the lens optic system (36) and the detecting device (34).

13. The device for detecting X-radiation according to any of claims 1 to 12, wherein the optical means is provided with a shielding means (46) for shielding the detecting device (34) against direct irradiation by X-rays.

14. A method of detecting X-radiation comprising the following steps:
converting an X-radiation into light by means of a scintillator (30);
detecting by means of a detecting device (34) the light produced by the scintillator (30); and
conducting the light produced by the scintillator (30) from an input end of the fibre optic system (32) arranged at the scintillator (30) to an output end of said fibre optic system (32);
directing the light emerging from the fibre optic system (32) onto the detecting device (34), which is arranged in spaced relationship with the fibre optic system (32), with the aid of an optical means (36, 44, 46) provided between the detecting device (34) and the fibre optic system (32); and
heating the entire fibre optic system (32) with the aid of a heating means (40) during the detection of X-radiation to a predetermined temperature with a homogeneous temperature distribution.

15. The method of detecting X-radiation according to claim 14, wherein the heating temperature of the fibre optic system (32) corresponds to a temperature at which a reduction rate v_{f-} of colour centres produced in the fibre optic system (32) while the X-radiation is being received is equal to or higher than a production rate v_{f+} of the colour centres.

16. The method of detecting X-radiation according to claim 14 or 15, wherein a lens optic system (36) is used an an optical means.

17. The method of detecting X-radiation according to claim 16, wherein the light emerging from the fibre optic system (32) is deflected by means of a light deflecting arrangement (44) disposed either between the fibre optic system (32) and the lens optic system (36) or between the lens optic system (36) and the detecting device (34).

18. The method of detecting X-radiation according to claim 16 or 17, wherein the detecting device (34) is shielded by means of a shielding arrangement (46) against direct irradiation by X-rays.

## Revendications

1. Dispositif pour capter des rayons X, aux caractéristiques suivantes :
un scintillateur (30) destiné à convertir en lumière des rayons X incidents sur celui-ci ;
un dispositif capteur (34) destiné à capter la lumière générée par le scintillateur (30) ;
une fibre optique (32) destinée à guider la lumière générée par le scintillateur (30) d'une extrémité d'entrée de la fibre optique (32) disposée sur le scintillateur (30) vers une extrémité de sortie de la fibre optique (32), caractérisé par le fait que le dispositif capteur (34) est disposé séparé spatialement de la fibre optique (32) et qu'entre le dispositif capteur (34) et la fibre optique (32) est prévu un dispositif optique dirigeant la lumière sortant de la fibre optique (32) vers le dispositif capteur (34) ; et
un dispositif de chauffage (40) destiné à chauffer toute la fibre optique (32), pendant la saisie de rayons X, à une température prédéterminée avec une répartition homogène de la température.

2. Dispositif pour capter des rayons X suivant la revendication 1, dans lequel la température de chauffage de la fibre optique (32) correspond à une température à laquelle un taux de dégradation (v_{f-}) de centres de couleur produits pendant la réception des rayons X dans la fibre optique (32) est égal ou supérieur à un taux de production (v_{f+}) des centres de couleur.

3. Dispositif pour capter des rayons X suivant la revendication 1 ou 2, dans lequel la température de chauffage est comprise entre 100°C et 150°C.

4. Dispositif pour capter des rayons X suivant l'une des revendications 1 à 3, dans lequel le dispositif de chauffage est constitué par un boîtier chauffé dans lequel est logée la fibre optique (32).

5. Dispositif pour capter des rayons X suivant l'une des revendications 1 à 3, dans lequel le dispositif de chauffage est constitué par un support tubulaire (40) chauffé destiné à supporter la fibre optique (32).

6. Dispositif pour capter des rayons X suivant l'une des revendications 1 à 3, dans lequel au moins une partie de la fibre optique (32) est disposée dans un volume de gaz clos, la fibre optique (32) étant chauffée par un chauffage du gaz contenu dans le volume de gaz.

7. Dispositif pour capter des rayons X suivant l'une des revendications 1 à 3, dans lequel le dispositif de chauffage est constitué par un dispositif de radiation destiné à irradier la fibre optique (32).

8. Dispositif pour capter des rayons X suivant la revendication 7, dans lequel le dispositif de radiation est un dispositif de radiation infrarouge.

9. Dispositif pour capter des rayons X suivant l'une des revendications 1 à 8, dans lequel le dispositif capteur (34) destiné à capter la lumière est constitué par un capteur à semi-conducteur.

10. Dispositif pour capter des rayons X suivant la revendication 9, dans lequel le capteur à semi-conducteur est constitué par une rangée de capteurs à semi-conducteur.

11. Dispositif pour capter des rayons X suivant l'une des revendications 1 à 10, dans lequel le dispositif optique est constitué par une lentille optique (36).

12. Dispositif pour capter des rayons X suivant la revendication 11, dans lequel le dispositif optique présente un dispositif de déviation de lumière (44) disposé soit entre la fibre optique (32) et la lentille optique (36), soit entre la lentille optique (36) et le dispositif capteur (34).

13. Dispositif pour capter des rayons X suivant l'une des revendications 1 à 12, dans lequel le dispositif optique présente un dispositif écran (46) destiné à protéger le dispositif capteur (34) contre une irradiation directe par des rayons X.

14. Procédé pour capter des rayons X, aux étapes suivantes consistant à :
convertir en lumière des rayons X à l'aide d'un scintillateur (30) ;
capter la lumière générée par le scintillateur (30) à l'aide d'un dispositif capteur (34) ;
guider la lumière générée par le scintillateur (30) d'une extrémité d'entrée de la fibre optique (32) disposée sur le scintillateur (30) vers une extrémité de sortie de la fibre optique (32) ;
diriger la lumière sortant de la fibre optique (32) vers le dispositif capteur (34) disposé séparé spatialement de la fibre optique (32) à l'aide d'un dispositif optique (36, 44, 46) prévu entre le dispositif capteur (34) et la fibre optique (32) ; et
chauffer toute la fibre optique (32), pendant la saisie de rayons X, à une température prédéterminée avec une répartition homogène de la température à l'aide d'un dispositif de chauffage (40).

15. Procédé pour capter des rayons X suivant la revendication 14, dans lequel la température de chauffage de la fibre optique (32) correspond à une température à laquelle un taux de dégradation (v_{f-}) de centres de couleur produits pendant la réception des rayons X dans la fibre optique (32) est égal ou supérieur à un taux de production (v_{f+}) des centres de couleur.

16. Procédé pour capter des rayons X suivant la revendication 14 ou 15, dans lequel une lentille optique (36) est utilisée comme dispositif optique.

17. Procédé pour capter des rayons X suivant la revendication 16, dans lequel la lumière sortant de la fibre optique (32) est déviée à l'aide d'un dispositif de déviation de lumière (44) disposé soit entre la fibre optique (32) et la lentille optique (36), soit entre la lentille optique (36) et le dispositif capteur (34).

18. Procédé pour capter des rayons X suivant la revendication 16 ou 17, dans lequel le dispositif capteur (34) est protégé, à l'aide d'un dispositif écran (46), contre une irradiation directe par des rayons X.
